# EUROPÄISCHE PATENTSCHRIFT

(11) **EP 0 727 457 B1**
(45) Veröffentlichungstag und Bekanntmachung des Hinweises auf die Patenterteilung: **07.07.1999**
(21) Anmeldenummer: 96101981.7
(22) Anmeldetag: 12.02.1996
(51) Int. Cl.: C08K 5/00, C09B 3/14, C08J 3/22, C08K 5/3437, C09B 5/62

(54) **Pigmenthaltige Zusammensetzung eines hochtemperaturbeständigen Kunststoffs**
Pigment-containing composition of a high temperature-stable resin
Composition de résine stable à température élevée contenant un pigment

(30) Priorität: 14.02.1995 DE 19504825
(43) Veröffentlichungstag der Anmeldung: 21.08.1996
(73) Patentinhaber: CONSTAB POLYMER-CHEMIE GmbH & Co., D-59602 Rüthen (DE)
(72) Erfinder: Wodniok, Lothar, Dr., D-59581 Warstein (DE)
(74) Vertreter: Fritz, Edmund Lothar, Dipl.-Chem.

(56) Entgegenhaltungen:
- EP-A- 0 023 191
- EP-A- 0 033 079
- EP-A- 0 638 613
- DE-B- 1 916 169

## Beschreibung

Aufgrund der mit dem Einsatz von Cadmiumpigmenten verbundenen ökologischen Probleme, was vor allem die Entsorgung der mit diesen Pigmenten eingefärbten Artikel angeht, ist der Einsatz von Cadmiumpigmenten in vielen Ländern gesetzlich stark eingeschränkt bzw. ganz verboten worden. Ausnahmen bilden einige Anwendungsgebiete, auf denen zur Zeit nachweislich kein technisch annähernd gleichwertiger Ersatz existiert. Dies ist in der EG-Richtlinie 91/338/EWG festgelegt worden, die in die 4. Novelle zur Gefahrstoffverordnung übernommen wurde und somit in Deutschland ab dem 01.11.1993 in Kraft getreten ist.

Bisher ist man bei der Erzielung brillanter (reiner) Farbtöne im Rot- und Gelbbereich bei hochtemperaturbeständigen Kunststoffen aufgrund der hohen Verarbeitungstemperaturen von teilweise recht deutlich über 300° C ausschließlich auf Cadmiumpigmente angewiesen. Nach Auffassung von Pigmentherstellern und -verarbeitern genügt nur diese Pigmentklasse den Anforderungen hoher Farbbrillanz bei gleichzeitig ausreichender Temperaturstabilität.

Aber auch auf diesem Gebiet sind die Endverarbeiter zunehmend an cadmiumfreien Einfärbungen interessiert, da zu erwarten ist, daß in näherer Zukunft der Einsatz von Cadmiumpigmenten generell verboten wird.

Aus der anorganischen Pigmentpalette sind bisher keine Typen bekannt, die das coloristische und anwendungstechnische Profil der Cadmiumpigmente auch nur annähernd erreichen.

Eisenoxidpigmente sind zwar thermisch sehr stabil, ihre Farbnuancen liegen aber im Bereich Braun über Rotbraun bis Marron.

Bleimolybdatpigmente sind von ähnlicher Umweltproblematik wie Cadmiumpigmente, besitzen keine ausreichende Temperaturstabilität für Verarbeitungstemperaturen oberhalb 280° C und erreichen auch nicht ganz die hohe Farbtonreinheit der Cadmiumpigmente.

Die Aufgabe der vorliegenden Erfindung besteht daher darin, eine Zusammensetzung enthaltend wenigstens einen hochtemperaturbeständigen Kunststoff zu schaffen, die ein ungiftiges Farbmittel mit einem Cadmiumpigment vergleichbaren Farbton enthält und sich bei Temperaturen oberhalb von 270° C extrudieren läßt, ohne daß die Stabilität des Farbmittels und dessen farbgebende Eigenschaften negativ beeinflußt werden.

Die Lösung dieser Aufgabe liefert eine erfindungsgemäße Zusammensetzung enthaltend wenigstens einen hochtemperaturbeständigen Kunststoff, der sich bei einer Temperatur oberhalb von 270° C extrudieren läßt, und wenigstens ein Perylenpigment als Farbmittel.

Bisher galten Perylenpigmente nach übereinstimmenden Angaben von Pigmentherstellern und -verarbeitern bei den Verarbeitungstemperaturen, wie sie bei einer Reihe von hochtemperaturstabilen Polymeren angewandt werden, als nicht ausreichend temperaturstabil.

Es ist daher überraschend, daß, wie nun gezeigt werden konnte, Pigmente vom Perylentyp wider Erwarten die hohen Verarbeitungstemperaturen bei der Extrusion hochtemperaturbeständiger Kunststoffe von über 270° C, ja häufig sogar im Bereich zwischen 300° C und 400° C, ohne Beeinträchtigung ihrer farbgebenden Eigenschaften überstehen.

Nur die aus der Pigmentklasse der organischen Pigmente erfindungsgemäß ausgewählten Perylenpigmente kommen hinsichtlich ihrer Farbbrillanz (Buntheit) den bislang verwendeten Cadmiumpigmenten nahe. Diese Perylenpigmente sind zu den organischen Pigmenten mit den höchsten Allgemeinechtheiten zu zählen.

Im Rahmen der Erfindung können u.a. die nachfolgend genannten Perylenpigmente eingesetzt werden:

| Colour Index Teil I | Colour Index Teil II | CAS-Nr. |
|---|---|---|
| Pigment Red 149 | 71137 | 4948-15-6 |
| Pigment Red 178 | 71155 | 3049-71-6 |
| Pigment Red 179 | 71130 | 5521-31-3 |

Sie leiten sich strukturell von der Perylen-3,4,9,10-tetracarbonsäure ab und besitzen aufgrund dessen eine sehr kompakte chemische Konstitution, die für die hohen Echtheiten der Pigmentklasse verantwortlich ist.

Die chemische Struktur dieser Pigmente ist im Anhang aufgezeigt.

Hersteller verschiedener Pigmentmarken vom Perylentyp sind u.a. BASF, Hoechst, Sandoz.

Die von uns durchgeführten Untersuchungen zielten im wesentlichen auf die Klärung der Frage ab, wie sich ein Perylenpigment beim Einsatz in einem hochtemperaturbeständigen Kunststoff bei dessen Verarbeitung anwendungstechnisch verhält, wobei die Coloristik naturgemäß im Vordergrund stand.

Es konnte gezeigt werden, daß das Perylenpigment PR 149 (Perylen-3,4,9,10-tetracarbonsäure-di (3,5-di-methylphenyl) -imid) entgegen vorherrschender technischer Meinung die hohen Verarbeitungstemperaturen bei der Herstellung entsprechender FEP- bzw. PSU-Masterbatches ohne nennenswerte Einbußen seiner coloristischen Leistungsfähigkeit und ohne erkennbare Beeinträchtigung des sonstigen Eigenschaftsprofils des Systems Pigment/Polymer selbst bei mehrfacher Extrusion übersteht, wobei die thermisch-mechanische Belastung deutlich über der bei der normalen Verarbeitung anfallenden Beanspruchung lag.

Es ließen sich somit coloristisch und anwendungstechnisch einwandfreie Masterbatches herstellen, die bereits im Kundenversuch erfolgreich eingesetzt wurden.

Für die Perylenpigmente PR 178 und PR 179 werden von den Herstellern Temperaturstabilitäten angegeben, die denen des hier untersuchten PR 149 im wesentlichen entsprechen; dies ist auch aufgrund der sehr ähnlichen chemischen Konstitution zu erwarten. Daher erscheinen auch diese beiden Pigmente für den beschriebenen Einsatz geeignet.

Die bei den Untersuchungen ausgewählten Kunststoffe FEP und PSU stellen zwei Vertreter hochtemperaturbeständiger Kunststoffe dar, deren Verarbeitungstemperaturen zwischen 300° C bis 400° C liegen. Es existiert eine Vielzahl weiterer Polymere mit diesem Verarbeitungstemperaturbereich, beispielsweise:

**Tabelle 1 -**

| hochtemperaturbeständige Kunststoffe (Auswahl) | | | |
|---|---|---|---|
| Fluorpolymere: | ETFE | Ethylen-tetrafluorethylen-Copolymer | Tefzel |
| | PFA | FE-Perfluoralkylvinylether-Copolymer | Teflon |
| | ECTFE | Polychlortrifluorethylen | Kel-F |
| | | | |
| Lin. Polyarylenoxide, | PPO | Polyphenylenoxide | |
| -sulfide, | PPS | Polyphenylensulfid | Ryton |
| -sulfone | PES | Polyethersulfon | Udel |
| | PPSU | Polyarylsulfon | Radel |
| | | | |
| Lin. Polymide: | PAI | Poly(amid-imid) | Torlon |
| | PEI | Poly(ether-imid) | Ultem |
| | PISO | Poly(imid-sulfon) | Vectra |

Die erfindungsgemäße Zusammensetzung liegt bevorzugt als sogenanntes Masterbatch in Granulatform vor mit einem Anteil von zwischen 1 Gewichtsprozent und 50 Gewichtsprozent an Perylenpigment und einem Anteil von zwischen 50 Gewichtsprozent und 99 Gewichtsprozent an hochtemperaturbeständigem Kunststoff sowie gegebenenfalls einem Anteil eines gebräuchlichen Additivs und/oder Füllstoffs.

### Beispiel 1

### Herstellung und coloristische Ausprüfung eines FEP-Masterbatches (Kurzbeschreibung)

- Masterbatchherstellung:: Auf einem Einschneckenextruder (Firma Killian) wurde ein fünfprozentiges Masterbatch folgender Rezeptur hergestellt:
5 % PV Echtrot B (PR 149,Hersteller: Hoechst AG)
95 % Teflon FEP 100 (Hersteller: DUPONT)

Die Pulvervormischung wurde auf einem Schnellmischer hergestellt.

Die Extrusion wurde bei einem Temperaturprofil von 290° C bis 320° C (Zylindertemperaturen) vorgenommen.

Das anfallende Zylindergranulat wurde, nachdem eine Probe für die coloristische Überprüfung entnommen worden war, erneut bei denselben Parametern extrudiert und der Vorgang noch drei Mal wiederholt.

Aus den entnommenen Proben wurden Preßlinge hergestellt, die anschließend visuell beurteilt und farbmetrisch vermessen wurden. Ermittelt wurde der Farbabstand zum Muster der ersten Extrusion.
**Ergebnisse:** Die Farbe des erhaltenen Masterbatches lag im Bereich von RAL 3000 und entspricht somit einer typischen Kennzeichnungsfarbe z.B. für Kabel. Die Muster der zweiten bis fünften Extrusion unterschieden sich nur unwesentlich vom ersten Muster. Dies konnte durch die Farbmessung bestätigt werden:

| Extrusions-Nr. | Delta E | Delta L | Delta a | Delta b |
|---|---|---|---|---|
| 1 | Ref. | Ref. | Ref. | Ref. |
| 2 | 0,48 | 0,47 | 0,09 | 0,07 |
| 3 | 0,82 | 0,49 | 0,00 | 0,66 |
| 4 | 1,04 | 0,74 | -0,65 | 0,32 |
| 5 | 1,14 | 0,74 | -0,74 | 0,46 |

**Fazit:** Selbst nach fünfmaliger Extrusion ergab sich eine nur unwesentliche Abtrübung des Farbtons.

### Beispiel 2

### Herstellung und coloristische Ausprüfung eines PSU-Masterbatches

Auf einem Einschneckenextruder (Firma PLASTIK MASCHINENBAU) wurde ein Masterbatch mit folgender Rezeptur hergestellt:
10 % PV Echtrot B (PR 149; Hersteller: Hoechst AG)
90 % Ultrason S Granulat (PSU; Hersteller BASF)

Die Vormischung wurde auf einem Schnellmischer hergestellt. Die Extrusion wurde bei einem Temperaturprofil von 270° C bis 310° C vorgenommen. Das anfallende Zylindergranulat wurde zur Verbesserung der Granulatform erneut bei denselben Parametern extrudiert. Der Farbton des Granulats lag in beiden Fällen in der Nähe von RAL 3000.

### Schlußfolgerung aus den Versuchen

Beide Masterbatches wurden inzwischen erfolgreich bei diversen Kunden eingesetzt. Das Perylenpigment PV Echtrot B (PR 149) stellt somit einen technisch äquivalenten Ersatz für Cadmiumrotpigmente auf diesem Anwendungsgebiet dar.

### Anhang

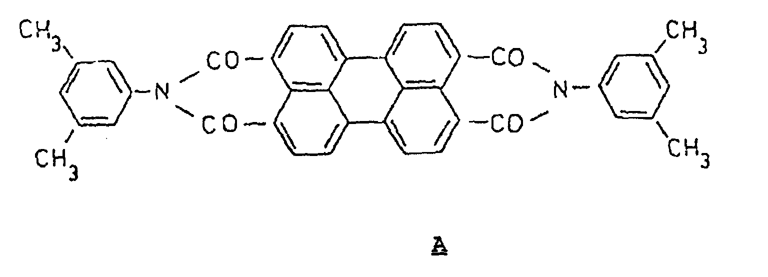

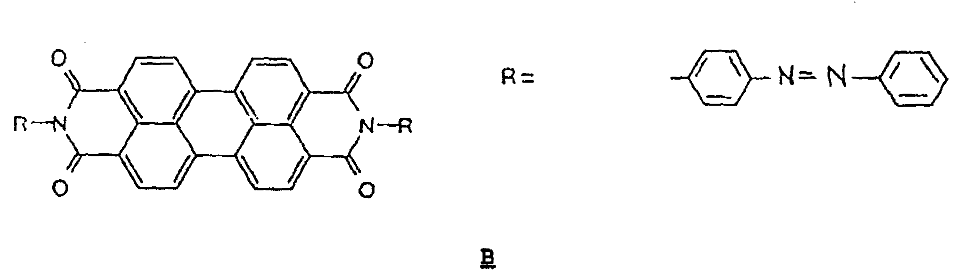

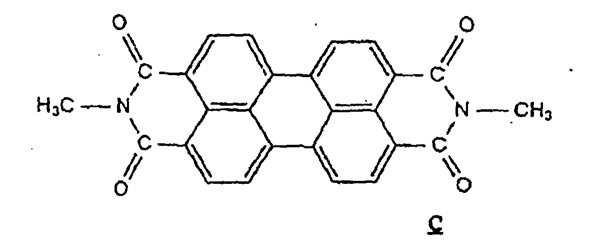

## Patentansprüche

1. Zusammensetzung enthaltend wenigstens einen hoch temperaturbeständigen Kunststoff mit einer Verarbeitungstemperatur von zwischen 300°C und 400°C, der ausgewählt wird aus einem Ethylen-tetrafluorethylenCopolymeren, FE-Perfluoralkylvinylether-Copolymeren, Polychlortrifluorethylen, Polyphenylenoxid, Polyphenylensulfid, Polyethersulfon, Polyarylsulfon, Poly(amid-imid), Poly(ether-imid), Poly(imid-sulfon) und als Farbmittel wenigstens ein Perylenpigment ausgewählt aus den Verbindungen der nachstehend wiedergegebenen Formeln A,B und C.

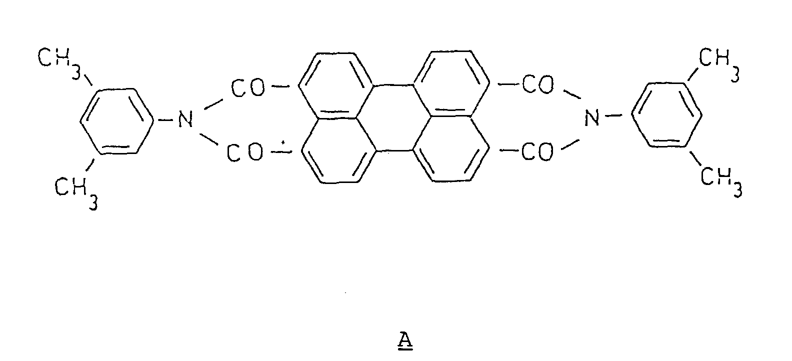

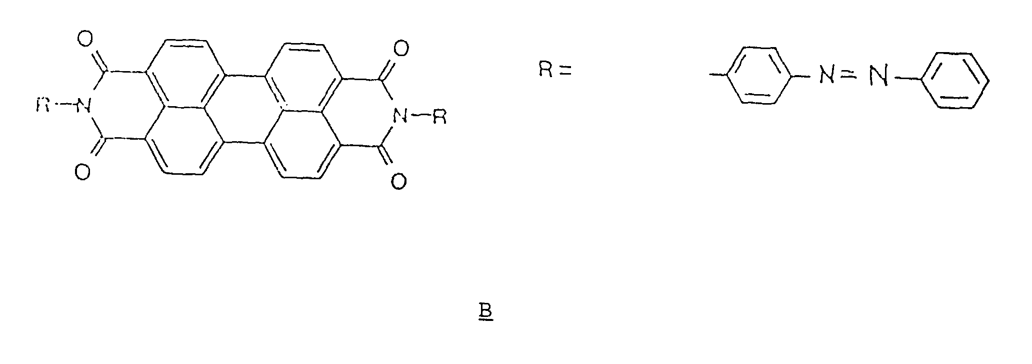

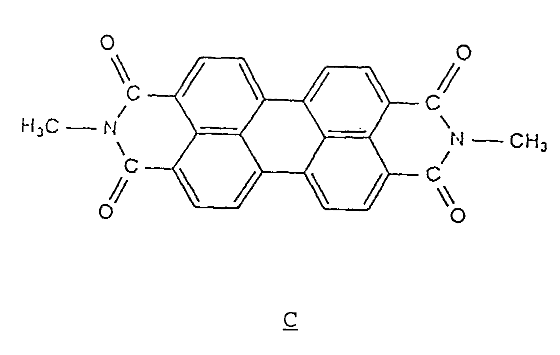

2. Zusammensetzung nach Anspruch 1, dadurch gekennzeichnet, daß diese als Masterbatches in Granulatform vorliegt mit einem Anteil von zwischen 1 Gewichtsprozent und 50 Gewichtsprozent an Perylenpigment und einem Anteil von zwischen 50 Gewichtsprozent und 99 Gewichtsprozent an hoch temperaturbeständigem Kunststoff sowie gegebenenfalls einem Anteil eines gebräuchlichen Additivs und/oder Füllstoffs.

## Claims

1. Composition containing at least one high temperature-stable resin with a processing temperature of between 300°C and 400°C which is selected from ethylene-tetrafluoroethylene copolymers, FE-perfluoroalkylvinylether copolymers, polychlorotrifluoroethylene, polyphenylene oxide, polyphenylene sulphide, polyether sulphone, polyaryl sulphone, poly(amide-imide), poly(ether-imide), poly(imide-sulphone) and as a colouring agent at least one perylene pigment being chosen from the compounds of the formulas A, B and C as set forth hereinafter

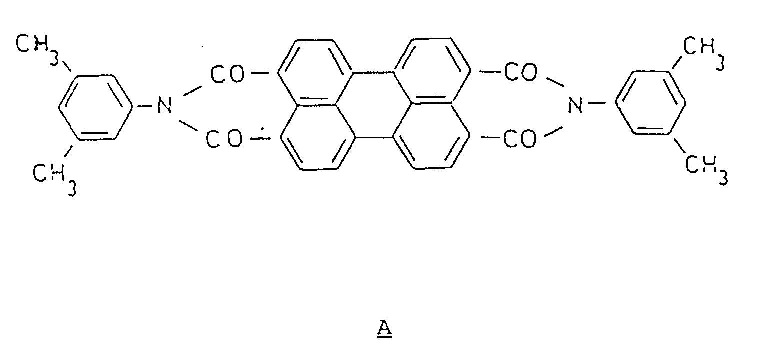

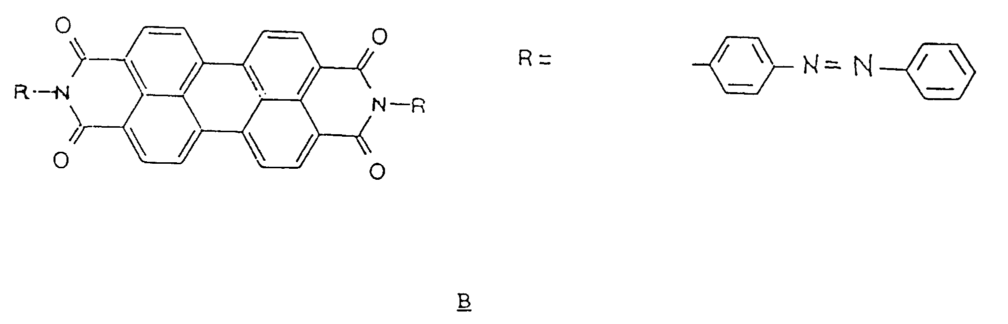

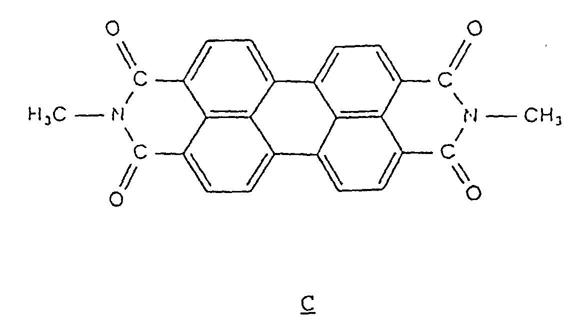

2. Composition as claimed in claim 1, characterised in that it is present as masterbatches in the form of granules with a portion of perylene pigment of between 1 percent by weight and 50 percent by weight and a portion of between 50 percent by weight and 99 percent by weight of a high temperature-stable resin as well as, if required, a portion of a usual additive and/or filling agent.

## Revendications

1. Composition contenant au moins une résine stable à température élevée avec une température de transformation située entre 300° C et 400° C, choisie parmi le groupe comprenant des copolymères d'éthylène-tétrafluoréthylène, des copolymères de FE-perfluoralkylvinyléther, du polychlorotrifluoréthylène, du poly(oxyde de phénylène), du poly(sulfure de phénylène), du polyéthersulfone, du polyarylsulfone, du poly(amide-imide), du poly(éther-imide), du poly(imide-sulfone) et en tant que colorant au moins un pigment de pérylène sélectionné parmi les combinaisons répondant aux formules A, B et C ci-après:

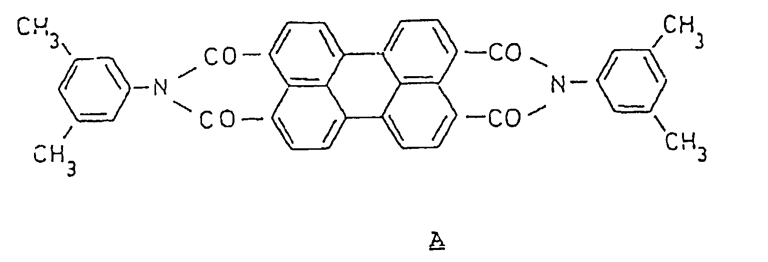

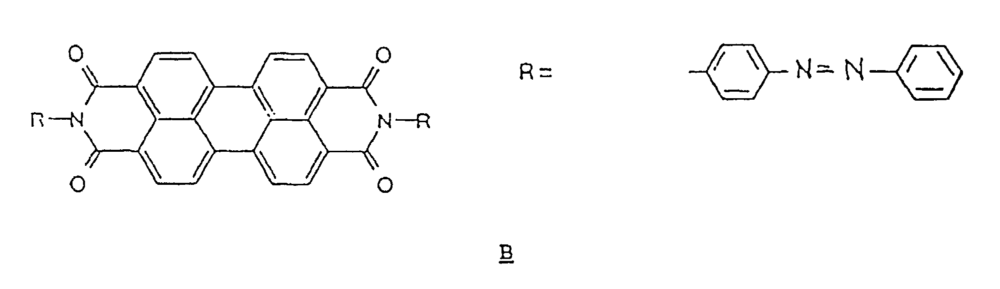

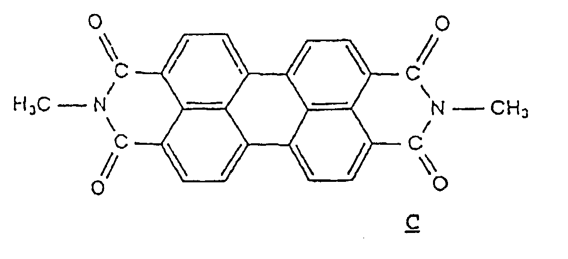

2. Composition suivant la revendication 1, caractérisée en ce qu'en tant que mélange mère, elle est présente sous forme de granulés avec une proportion comprise entre 1 et 50 pour cent en poids de pigment de pérylène et une proportion comprise entre 50 et 99 pour cent en poids d'une résine stable à température élevée ainsi que le cas échéant une porportion d'un additif et/ou d'une charge tradionnels.
